# EUROPEAN PATENT SPECIFICATION

(11) **EP 1 674 496 B1**
(45) Date of publication and mention of the grant of the patent: **31.08.2011**
(21) Application number: 04773494.2
(22) Date of filing: 22.09.2004
(51) Int. Cl.: C08G 63/672, C08L 67/02, C08L 69/00

(54) **POLYESTER RESIN COMPOSITION AND OPTICAL MATERIAL**
POLYESTERHARZZUSAMMENSETZUNG UND OPTISCHES MATERIAL
COMPOSITION DE RESINE DE POLYESTER, ET MATIERE OPTIQUE

(30) Priority: 25.09.2003 JP 2003332884
(43) Date of publication of application: 28.06.2006
(73) Proprietor: OSAKA GAS CO., LTD., Osaka-shi, Osaka 541-0046 (JP)
(72) Inventor: FUJI, Michiaki, Kyoto-shi, Kyoto 612-8338 (JP)
(74) Representative: Behnisch, Werner
(86) International application number: PCT/JP2004/014320
(87) International publication number: WO 2005/030833

(56) References cited:
- JP-A- 8 041 303
- US-A- 6 066 711

## Description

### TECHNICAL FIELD

The present invention relates to a polyester and polycarbonate resin composition which can be suitably used for optical materials. More specifically, the present invention relates to a resin composition which is low in birefringence and superior in transparency, mechanical strength and dimension stability and has a good balance between a refractive index and an Abbe number, high heat resistance and good fluidity, and which can be suitably used for optical materials such as a camera lens, an eyeglass lens, an optical disk, an optical fiber and an optical sheet.

### BACKGROUND ART

Hitherto, resins which are transparent and have excellent mechanical properties are often used as an optical material. For example, poly(methyl methacrylate) (hereinafter, abbreviated as PMMA), polycarbonate (hereinafter, abbreviated as PC), and amorphous polyolefin (hereinafter, abbreviated as APO) are used as the optical materials such as a compact disk, a laser disk, a projection lens, a f-theta lens, a photograph lens, a viewfinder lens, an optical pickup lens and a digital camera lens, and they are used for transparent parts and reflection material of an automobile. PMMA is often used because of excellent transparency and small optical anisotropy, but it has high hygroscopicity, and deformations such as camber tend to appear after molding and morphological stability is low.

On the other hand, PC has high heat resistance and excellent transparency, but it has a problem that its fluidity is poor and this causes the birefringence of a shaped article to increase, and therefore it cannot be said that it is adequately satisfactory as an optical material. And, APO has high heat resistance and excellent transparency, but it is low in fluidity and apt to color in molding. And, since APO cannot attain sufficient adhesion without being subjected to a step of pretreatment such as plasma treatment in bonding a vapor deposition film or a hard-coated film to APO, it cannot be said that it is adequately satisfactory as an optical material.

Further, in recent years, an optical disk and a digital videodisk, which record and play back information such as voices, images and characters using laser light have been sharply developed, and a substrate material having higher-performance optical properties is desired. Since photograph lenses of miniature cameras used for a digital camera or a mobile phone are increasingly downsized and further image-recognition systems such as CCD and CMOS trend toward miniaturization and high precision, a resin material having less optical anisotropy is desired.

And, the endurance in use in more severe environments is required. For example, it was requirements in the past that transparency was not impaired under the conditions of 65°C in temperature and 80% in humidity, but recently it is required that the transparency is not impaired and the deformation of a lens surface is small under the conditions of 85°C in temperature and 90% in humidity.

As polyester polymer or polyester copolymer, there is proposed as an optical material a polymer which is obtained from aromatic dicarboxylic acid and 9,9-bis[4-(2-hydroxyethoxy)phenyl]fluorenes in Japanese Patent No. 2843215 and No. 2843214. And, a polymer which is obtained from alicyclic dicarboxylic acid and 9,9-bis[4-(2-hydroxyethoxy)phenyl]fluorenes is proposed in Japanese Patent No. 3331121, Japanese Publicated Application H11-60706, and Japanese Publicated Application 2000-319366. These polyester copolymers are useful as an optical material because of a high refractive index, a low birefringence, high heat resistance and transparency, but they are not necessarily satisfactory since expensive raw materials are used or the heat resistance is insufficient.

As a resin composition formed by blending a polyester polymer with PC, there is proposed, for example, a resin composition obtained by blending polyester obtainable from aromatic dicarboxylic acid with polycarbonate obtainable from an aromatic dihydroxyl compound in Japanese Publicated Application 2002-265771, but there is no description on applications to optical uses, for example, optical lenses such as a camera lens and an eyeglass lens, and optical films.

In Japanese Patent No. 3023279, there is proposed a resin composition as an optical material, which is obtained by blending a polymer obtainable from aromatic dicarboxylic acid and 9,9-bis[4-(2-hydroxyethoxy)phenyl]fluorenes with PC. This resin composition is useful as an optical material because of high heat resistance, a high refractive index and a low birefringence, but a material, which does not lose the transparency and has the small deformation of a lens surface under the conditions of 85°C in temperature and 90% in humidity, and has the less coloring in molding, the good balance between a refractive index and an Abbe number and the low birefringence while maintaining the heat resistance, is desired.

JP-A-8 041 303 discloses a blend of polycarbonate and a polyester from terephthalic acid and fluoren diol.

US-A-6 066 711 relates in general to a polyester polymer for optical applications with excellent transparency, extremely low optical anisotropy and good mechanical properties in general. In detail, it discloses a polyester with alicyclic dicarboxylic acid and fluoren diol.

### SUMMARY OF THE INVENTION

It is an object of the present invention to provide a resin which resolves the above-mentioned problems, and is low in birefringence and superior in transparency, mechanical strength and dimension stability, and has a good balance between a refractive index and an Abbe number, high heat resistance and good fluidity, and which can be suitably used for optical materials such as a camera lens, an eyeglass lens, an optical disk, an optical fiber and an optical sheet.

The present inventor made various investigations in order to resolve the above-mentioned issues, and consequently found that the above issues can be resolved by employing a resin composition obtained by blending a polyester polymer obtainable from a dicarboxylic acid compound and a dihydroxyl compound, in which the dicarboxylic acid compound comprises 1,4-cyclohexane dicarboxylic acid and/or an ester-forming derivative thereof and the dihydroxyl compound comprises a specific dihydroxyl compound, with a polycarbonate. These findings have now led to completion of the present invention.

That is, the present invention is characterized by being a resin composition obtained by blending a polyester polymer obtainable from a dicarboxylic acid compound and a dihydroxyl compound with a polycarbonate, wherein the dicarboxylic acid compound comprises 1,4-cyclohexane dicarboxylic acid and/or an ester-forming derivative thereof and the dihydroxyl compound comprises a compound expressed by the formula (1): 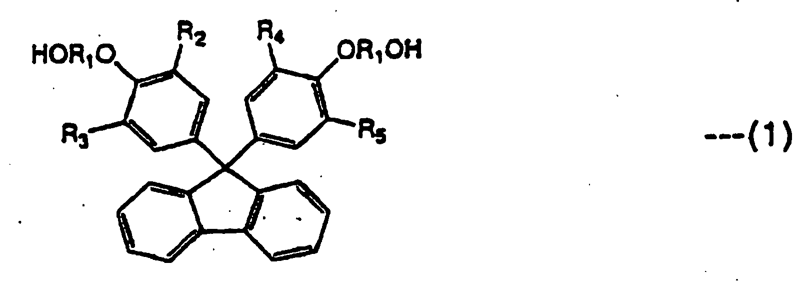 wherein R₁ is an alkylene group having 2 to 4 carbon atoms, and R₂, R₃, R₄, and R₅ represent hydrogen, or an alkyl group, having 1 to 4 carbon atoms, an aryl group or an aralkyl group respectively, and may be identical to or different from one another.

Further, the resin composition of the present invention is preferably obtained by blending a polyester polymer obtainable from a dicarboxylic acid compound and a dihydroxyl compound with polycarbonate, wherein the dicarboxylic acid compound comprises 1,4 -cyclohexanedicarboxylic acid and/or an ester-forming derivative thereof and the dihydroxyl compound comprises a compound expressed by the formula (1), and a blending ratio of the polyester polymer and the polycarbonate is in a range from 5 : 95 to 95 : 5 by weight.

And, the alicyclic dicarboxylic acid is preferably at least one species of compounds selected from cyclohexanedicarboxylic acid, decalindicarboxylic acid, norbornanedicarboxylic acid, adamantanedicarboxylic acid, and tricyclodecendicarboxylic acid.

In accordance with the present invention, it becomes possible to provide a material which is low in birefringence and superior in transparency, mechanical strength and dimension stability, and has high heat resistance, good fluidity and a good balance between a refractive index and an Abbe number, and therefore has a good balance between the moldability and the optical properties, and it becomes possible to provide a resin which can be suitably used for optical materials such as a camera lens, an eyeglass lens, an optical disk, an optical fiber and an optical sheet.

### BRIEF DESCRIPTION OF THE DRAWINGS

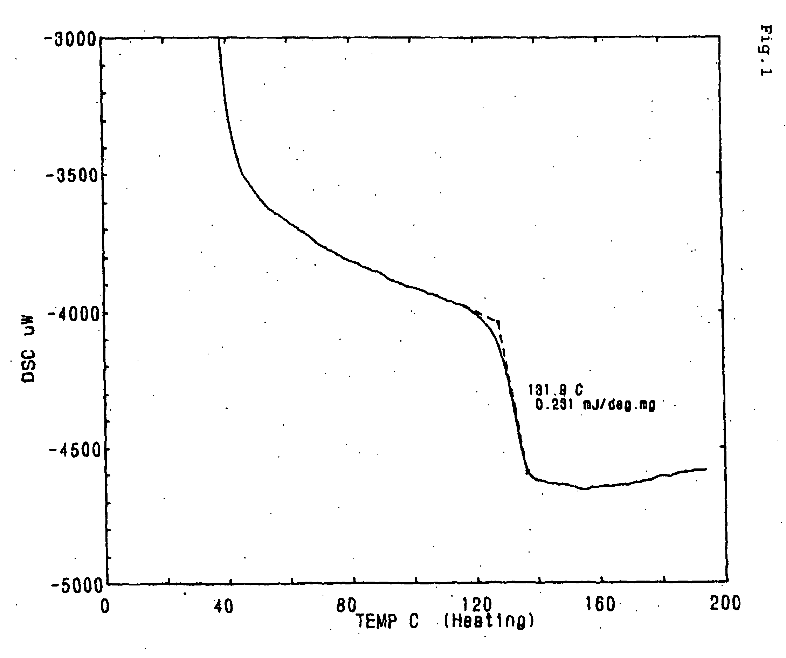

Fig. 1 shows a DSC measurement chart of a resin composition of Example 1.

### DETAILED DESCRIPTION OF THE INVENTION

Hereinafter, the embodiments of the present invention will be described.

A polyester resin composition of the present invention is a resin composition obtained by blending a polyester polymer obtainable from a dicarboxylic acid compound and a dihydroxyl compound with a polycarbonate, wherein the dicarboxylic acid compound comprises 1,4-cyclohexanedicarboxylic acid and/or an ester-forming derivative thereof and the dihydroxyl compound comprises a compound expressed by the formula (1): 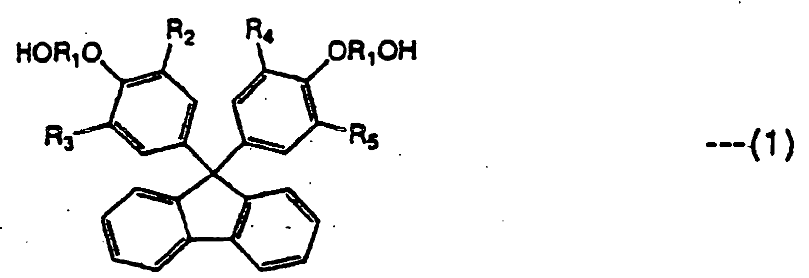 wherein R₁ is an alkylene group having 2 to 4 carbon atoms, and R₂, R₃, R₄, and R₅ represent hydrogen, or an alkyl group, having 1 to 4 carbon atoms, an aryl group or an aralkyl group respectively, and may be identical to or different from one another. Examples of the alicyclic dicarboxylic acids made available for the polyester polymer of the present invention include monocyclic alicyclic dicarboxylic acids such as cyclohexanedicarboxylic acid expressed by the following formula (2) and polycyclic alicyclic dicarboxylic acids such as decalindicarboxylic acids expressed by the following formula (3) and (4); norbornanedicarboxylic acids expressed by the following formula (5) and (6); adamantanedicarboxylic acids expressed by the following formula (7) and (8); and tricyclodecendicarboxylic acids expressed by the following formula (9), (10) and (11) : 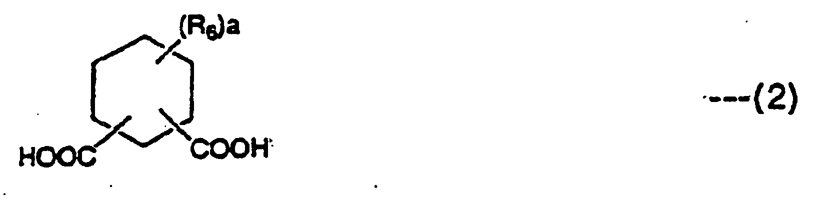 wherein R₆ represents hydrogen, or an alkyl group, an aryl group or an aralkyl group having 1 to 7 carbon atoms, respectively, and may be identical to or different from one another, and a is a natural number of 1 to 3; 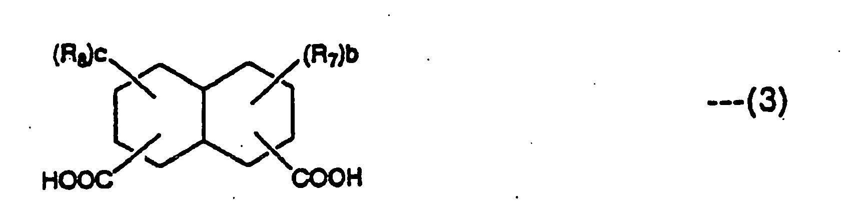 wherein R₇ and R₈ represent hydrogen, or an alkyl group, an aryl group or an aralkyl group having 1 to 7 carbon atoms, respectively, and may be identical to or different from each other, and b and c are a natural number of 1 to 7; 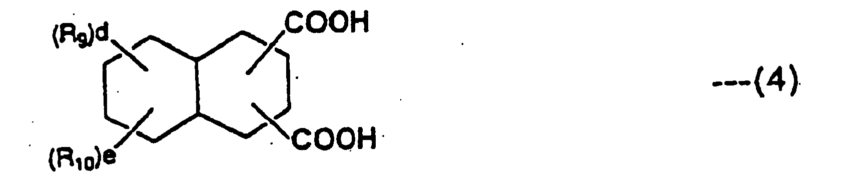 wherein R₉ and R₁₀ represent hydrogen, or an alkyl group, an aryl group or an aralkyl group having 1 to 7 carbon atoms, respectively, and may be identical to or different from each other, and d and e are a natural number of 1 to 7; 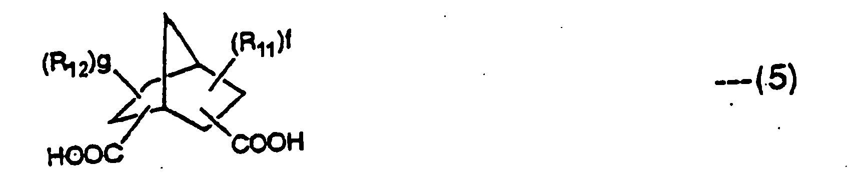 wherein R₁₁ and R₁₂ represent hydrogen, or an alkyl group, an aryl group or an aralkyl group having 1 to 7 carbon atoms, respectively, and may be identical to or different from each other, and f and g are a natural number of 1 to 7; 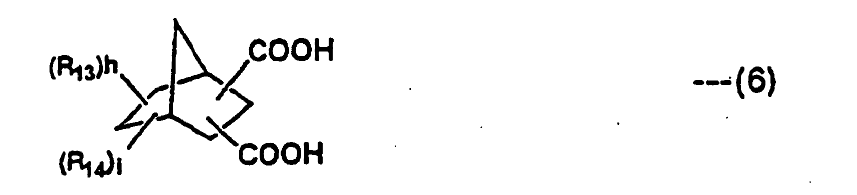 wherein R₁₃ and R₁₄ represent hydrogen, or an alkyl group, an aryl group or an aralkyl group having 1 to 7 carbon atoms, respectively, and may be identical to or different from each other, and h and i are a natural number of 1 to 7; 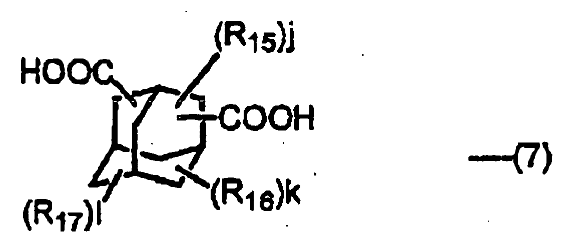 wherein R₁₅, R₁₆ and R₁₇ represent hydrogen, or an alkyl group, an aryl group or an aralkyl group having 1 to 7 carbon atoms, respectively, and may be identical to or different from one another, and j and k are a natural number of 1 to 8 and 1 is a natural number of 1 to 9; 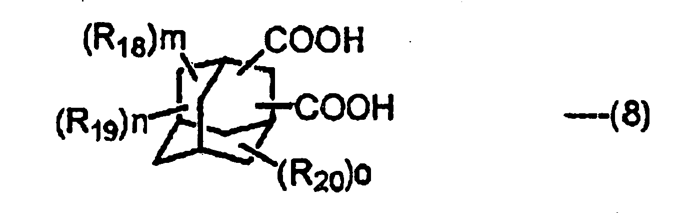 wherein R₁₈, R₁₉ and R₂₀ represent hydrogen, or an alkyl group, an aryl group or an aralkyl group having 1 to 7 carbon atoms, respectively, and may be identical to or different from one another, and m and n are a natural number of 1 to 8 and o is a natural number of 1 to 9; 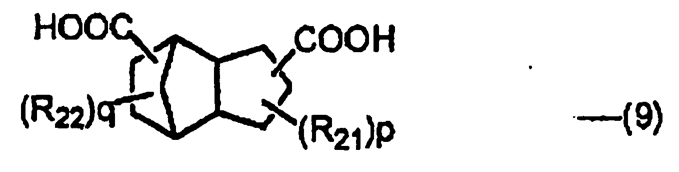 wherein R₂₁ and R₂₂ represent hydrogen, or an alkyl group, an aryl group or an aralkyl group having 1 to 7 carbon atoms, respectively, and may be identical to or different from each other, and p and q are a natural number of 1 to 7; 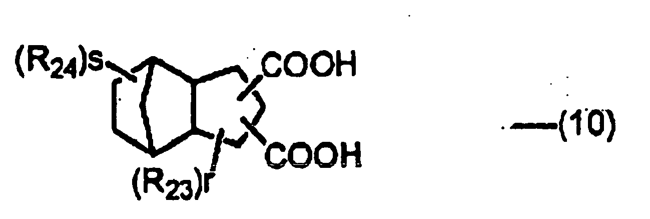 wherein R₂₃ and R₂₄ represent hydrogen, or an alkyl group, an aryl group or an aralkyl group having 1 to 7 carbon atoms, respectively, and may be identical to or different from each other, and r and s are a natural number of 1 to 7; 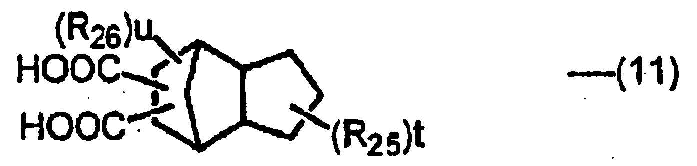 wherein R₂₅ and R₂₆ represent hydrogen, or an alkyl group, an aryl group or an aralkyl group having 1 to 7 carbon atoms, respectively, and may be identical to or different from each other, and t and u are a natural number of 1 to 8.

Examples of ester-forming derivatives of these alicyclic dicarboxylic acid include ester-forming derivatives of dicarboxylic acid commonly used for polyester and include, for example, alkyl esters such as dimethyl ester, diethyl ester and the like.

These alicyclic dicarboxylic acids or ester-forming derivatives thereof may be used alone or in combination of two or more species.

Among these alicyclic dicarboxylic acids, 1,4-cyclohexanedicarboxylic acid, 1,4-cyclohexanedicarboxylic acid dimethyl ester, 2,6-decalindicarboxylic acid, and 2,6-decadecalindicarboxylic acid dimethyl ester are preferred in point of ease of synthesis, the moldability and optical properties but are not limited to these dicarboxylic acids.

1,4-Cyclodicarboxylic acid has isomers of trans/cis, but the ratio between trans and cis isomers is not particularly limited. The trans isomer has a melting point of about 312°C which is higher than that of the cis isomer. The cis isomer has a melting point of about 150°C. When the polyester of the present invention is polymerized by melt-polymerization, it is polymerized at elevated temperatures (230 to 300°C). During this polymerization, transition between trans and cis isomers occurs, and the ratio between trans and cis isomers of the resin ultimately obtained falls within a range of 50/50 to 70/30 when the ratio between trans and cis at the stage of monomer, measured by ¹H-NMR, is 90/10 to 10/90.

In the present invention, alicyclic dicarboxylic acid or an ester-forming derivative thereof may be contained in arbitrary amount of 1 to 100 mol% with respect to 100 mol% of the total dicarboxylic acid components, but when it is used together with aliphatic dicarboxylic acid as an another dicarboxylic acid, its content is preferably 50 mol% or less with respect to 100 mol% of the total dicarboxylic acid components in order to enhance heat resistance more. When it is used together with monocyclic aromatic dicarboxylic acid as another dicarboxylic acid, its content is preferably 80 mol% or less in order to reduce the birefringence. When it is used together with polycyclic aromatic dicarboxylic acid or biphenyl dicarboxylic acid as an another dicarboxylic acid, its content is preferably 50 mol% or less in order to reduce the birefringence.

Examples of dicarboxylic acids used as another component in the present invention include aliphatic dicarboxylic acids such as malonic acid, succinic acid, glutaric acid, adipic acid, pimelic acid, suberic acid, azelaic acid, methylmalonic acid, ethylmalonic acid and the like; monocyclic aromatic dicarboxylic acids such as terephthalic acid, isophthalic acid and the like; naphthalenedicarboxylic acids such as 2,6-naphthalenedicarboxylic acid, 1,8-naphthalenedicarboxylic acid and the like; polycyclic aromatic dicarboxylic acids such as anthracenedicarboxylic acid, phenanthrenedicarboxylic acid and the like; and biphenyldicarboxylic acids such as 2,2'-biphenyldicarboxylic acid and the like.

In the present invention, examples of dihydroxyl compounds expressed by the formula (1) include 9,9-bis[4-(2-hydroxyethoxy)phenyl]fluorene, 9,9-bis[4-(2-hydroxyethoxy)-3-methylphenyl]fluorene, 9,9-bis[4-(2-hydroxyethoxy)-3,5-dimethylphenyl]fluorene, 9,9-bis[4-(2-hydroxyethoxy)-3-ethylphenyl]fluorene, 9,9-bis[4-(2-hydroxyethoxy)-3,5-diethylphenyl]fluorene, 9,9-bis[4-(2-hydroxyethoxy)-3-propylphenyl]fluorene, 9,9-bis[4-(2-hydroxyethoxy)-3,5-dipropylphenyl]fluorene, 9,9-bis[4-(2-hydroxyethoxy)-3-isopropylphenyl]fluorene, 9,9-bis[4-(2-hydroxyethoxy)-3,5-diisopropylphenyl]fluorene, 9,9-bis[4-(2-hydroxyethoxy)-3-n-butylphenyl]fluorene, 9,9-bis[4-(2-hydroxyethoxy)-3,5-di-n-butylphenyl]fluorene, 9,9-bis[4-(2-hydroxyethoxy)-3-isobutylphenyl]fluorene, 9,9-bis[4-(2-hydroxyethoxy)-3,5-diisobutylphenyl]fluorene, 9,9-bis[4-(2-hydroxyethoxy)-3-(1-methylpropyl)phenyl]fluorene, 9,9-bis[4-(2-hydroxyethoxy)-3,5-bis(1-methylpropyl)phenyl]fluorene, 9,9-bis[4-(2-hydroxyethoxy)-3-phenylphenyl]fluorene, 9,9-bis[4-(2-hydroxyethoxy)-3,5-diphenylphenyl]fluorene, 9,9-bis[4-(2-hydroxyethoxy)-3-benzylphenyl]fluorene, 9,9-bis[4-(2-hydroxyethoxy)-3,5-dibenzylphenyl]fluorene, 9,9-bis[4-(3-hydroxypropoxy)phenyl]fluorene, and 9,9-bis[4-(4-hydroxybutoxy)phenyl]fluorene, and these compounds may be used alone or in combination of two or more species. Among these, 9,9-bis[4-(2-hydroxyethoxy)phenyl]fluorene and 9,9-bis[4-(2-hydroxyethoxy-3-methyl)phenyl]fluorene are most preferable from the viewpoint of the optical properties and the moldability.

The 9,9-bis[4-(2-hydroxyethoxy)phenyl]fluorene is obtained, for example, by adding ethylene oxide (hereinafter, abbreviated as EO) to 9,9-bis(4-hydroxyphenyl)fluorene. In this addition, impurities such as three EO adduct and four EO adduct, in which several ethylene oxide molecules are excessively added to each of both hydroxyl groups of phenol, may be included in addition to two EO adduct (9,9-bis[4-(2-hydroxyethoxy)phenyl]fluorene,) in which an ethylene oxide molecule is added to both hydroxyl groups, respectively. In order to improve the heat resistance of the polyester polymer, the purity of the two EO adduct is preferably 95% or more and more preferably 97% or more.

Another method of obtaining 9,9-bis[4-(2-hydroxyethoxy)phenyl]fluorene includes a method by adding phenoxy ethanol directly to fluorenone. In this case, an adduct formed by adding EO excessively is hard to be contained, and the 9,9-bis[4-(2-hydroxyethoxy)phenyl]fluorene can be more suitably used.

In order to produce the polyester polymer of the present invention by transesterification of a melt-polymerization process, a ratio of the dihydroxyl compound expressed by the formula (1) is preferably 10 to 95 mol% of a glycol ingredient in a resin. When this ratio is 95 mol% or lower, there is an advantage that a melt-polymerization reaction is readily to proceed and a polymerization time is short. In addition, when it is larger than 95 mol%, the polymerization can be performed in short time by producing the polymer by a solution polymerization process or an interfacial polymerization process. And, the ratio of 10 mol% or higher is preferred in that a glass transition point of a resin is high.

And, if an acid containing sulfur (for example, sulfuric acid, p-toluenesulfonic acid) exists, resulting from a raw material used, diethylene glycol becomes apt to be produced. When an amount of diethylene glycol in a polymer exceeds 6 mol%, a reduction in the glass transition point, an indicator of heat resistance, or a reduction in the refractive index becomes large, a change in the polymer properties increases, and it become difficult to economically provide a polymer of industrially stable quality.

The amount of diethylene glycol is preferably 4 mol% or less and particularly preferably 3 mol% or less.

As the polycarbonate used in the present invention, aromatic polycarbonate is particularly suitable. As a polymerization method of polycarbonate, a method of reacting a dihydroxyl compound with phosgene in the presence of an acid binder (solution polymerization process) and a method of reacting a carbonate ester with a dihydroxyl compound by ester interchange (transesterification) are preferably employed. Of these methods, the transesterification is favorable. In the transesterification, its polymerization aspect and form are not particularly limited. For example, any method of a melt-polymerization method and a solid-state polymerization may be employed, but the melt-polymerization method is industrially desirable.

As an aromatic dihydroxyl compound, there are exemplified, specifically, bis(4-hydroxyaryl)alkanes such as bis(4-hydroxyphenyl)methane, 2,2-bis(4-hydroxyphenyl)propane, 2,2-bis(4-hydroxy-3-methylphenyl)propane, bis(4-hydroxyphenyl)methane, 1,1-bis(4-hydroxyphenyl)-1-phenylethane, 4,4'-[1,3-phenylenebis(1-methylethylidene)]bisphenol, 4,4'-[1,4-phenylenebis(1-methylethylidene)]bisphenol, 9,9-bis(4-hydroxyphenyl)fluorene, 9,9-bis(4-hydroxy-3-methylphenyl)fluorene, and 9,9-bis(4-hydroxy-3,5-dimethylphenyl)fluorene; bis(hydroxyaryl)cycloalkanes such as 1,1-bis(4-hydroxyphenyl)cyclohexane, 1,1-bis(4-hydroxyphenyl)-3,3,5-trimethylcyclohexane, 4-[1-[3-(4-hydroxyphenyl)-4-methylcyclohexyl]-1-methylethyl]-phenol, 4,4'-[1-methyl-4-(1-methylethyl)-1,3-cyclohexanediyl]bisphenol, and 2,2,2',2'-tetrahydro-3,3,3',3'-tetramethyl-1,1'-spirobis-[1H-indene]-6,6'-diol; dihydroxyaryl ethers such as bis(4-hydroxyphenyl)ether, and 4,4'-dihydroxy-3,3'-dimethylphenyl ether; dihydroxydiaryl sulfides such as 4,4'-dihydroxydiphenyl sulfide, and 4,4'-dihydroxy-3,3'-dimethyldiphenylsulfide; dihydroxydiaryl sulfoxides such as 4,4'-dihydroxydiphenyl sulfoxide, and 4,4'-dihydroxy-3,3'-dimethyldiphenylsulfoxide; dihydroxydiaryl sulfones such as 4,4'-dihydroxydiphenyl sulfone and 4,4'-dihydroxy-3,3'-dimethyldiphenyl sulfone; dihydroxydiaryl isatines such as 4,4'-dihydroxydiphenyl-3,3'-isatine; dihydroxydiaryl xanthenes such as 3,6-dihydroxy-9,9-dimethylxanthene; and dihydroxybenzenes such as resorcin, hydroquinone, 2-tert-butylhydroquinone, 2-phenylhydroquinone, 2-cumylhydroquinone, and 4,4-dihydroxydiphenyl.

Among others, 2,2-bis(4-hydroxyphenyl)propane is given as a preferable aromatic dihydroxyl compound from the viewpoint of the stability as a monomer and the availability of a substance containing less impurities.

And, as other aromatic dihydroxyl compounds, there may be used, for example, one or more species selected from bisphenols such as bis(4-hydroxyphenyl)methane, 1,1-bis(4-hydroxyphenyl)ethane, 1,1-bis(4-hydroxyphenyl)propane, 2,2-bis(4-hydroxyphenyl)butane, 2,2-bis(4-hydroxyphenyl)pentane, 2,2-bis(4-hydroxyphenyl)isopentane, 2,2-bis(4-hydroxyphenyl)hexane, 2,2-bis(4-hydroxyphenyl)isohexane, 4,4'-dihydroxytriphenylmethane, 4,4'-dihydroxytetraphenylmethane, 1,1-bis(4-hydroxyphenyl)cyclohexane, 2,2-bis(4-hydroxy-3-methylphenyl)propane, 2,2-bis(4'-hydroxy-3',5'-dimethylphenyl)propane, dihydroxydiphenyl ether, dihydroxydiphenyl sulfone and dihydroxydiphenyl sulfide; and dihydric phenolic compounds such as hydroquinone, resorcin, o-methylresorcin and o-cumylresorcin.

As polycarbonate, an aromatic polycarbonate which is obtained, for example, by interfacial polymerization of 2,2-bis(4-hydroxyphenyl)propane with phosgene in an alkaline aqueous solution-methylene chloride system, is suitably used.

And, the resin composition of the present invention may be mixed with a thermal stabilizer in order to inhibit a transesterification reaction of a polyester polymer (first component) with polycarbonate (second component) or to prevent reduction in molecular weight or the deterioration of color tone at the time of molding.

Examples of such a thermal stabilizer include phosphorous acid, phosphoric acid, phosphonous acid, phosphonic acid and esters thereof, and specifically include triphenyl phosphite, tris(nonylphenyl)phosphite, tris(2,4-di-tert-butylphenyl)phosphite, tridecylphosphite, trioctylphosphite, trioctadecylphosphite, didecylmonophenylphosphite, dioctylmonophenylphosphite, diisopropylmonophenylphosphite, monobutyldiphenylphosphite, monodecyldiphenylphosphite, monooctyldiphenylphosphite, bis(2,6-di-tert-butyl-4-methylphenyl)pentaerythritoldiphosphite, 2,2-methylenebis(4,6-di-tert-butylphenyl)octylphosphite, bis(nonylphenyl)pentaerythritoldiphosphite, bis(2,4-di-tert-butylphenyl)pentaerythritoldiphosphite, distearylpentaerythritoldiphosphite, tributyl phosphate, triethyl phosphate, trimethyl phosphate, triphenyl phosphate, diphenylmonoorthoxenyl phosphate, dibutyl phosphate, dioctyl phosphate, diisopropyl phosphate, tetrakis(2,4-di-tert-butylphenyl) 4,4'-biphenylenediphosphinate, dimethyl benzenephosphonate, diethyl benzenephosphonate, and dipropyl benzenephosphonate. Among others, tris(nonylphenyl)phosphite, trimethyl phosphate, tris(2,4-di-tert-butylphenyl)phosphite, bis(2,4-di-tert-butylphenyl)pentaerythritoldiphosphite, and dimethyl benzenephosphonate are preferably employed.

These thermal stabilizers may be used alone or in combination of two or more species. An amount of such a thermal stabilizer to be mixed is preferably 0.0001 to 1 parts by weight, more preferably 0.0005 to 0.5 parts by weight, and furthermore preferably 0.001 to 0.2 parts by weight with respect to 100 parts by weight of the total amount of the polyester polymer (first component) and the polycarbonate (second component).

And, the resin composition of the present invention may be mixed with a usually known antioxidant for the purpose of preventing oxidation. Examples of such an antioxidant include pentaerythritol tetrakis(3-mercaptopropionate), pentaerythritol tetrakis(3-laurylthiopropionate), glycerol-3-stearylthiopropionate, triethyleneglycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxy-hydrocynamide), 3,5-di-tert-butyl-4-hydroxy-benzylphosphonate-diethyl ester, tris(3,5-di-tert-butyl-4-hydroxybenzyl)isocyanurate, 4,4'-biphenylenediphosphinic acid tetrakis(2,4-di-tert-butylphenyl), and 3,9-bis{1,1-dimethyl-2-[β-(3-tert-butyl-4-hydroxy-5-methylphenyl)propionyloxy]ethyl}-2,4,8,10-tetraoxaspiro(5,5)undecane.

Amounts of these antioxidants to be mixed is preferably 0.0001 to 0.5 parts by weight with respect to 100 parts by weight of the total amount of the polyester polymer (first component) and the polycarbonate(second component).

And, the resin composition of the present invention may be mixed with a release agent, within the bounds of not impairing the object of the present invention, in order to improve a releasing property from a die at the time of melt molding more. Examples of such a release agent include a higher fatty acid ester of a monohydric or a polyhydric alcohol, a higher fatty acid, paraffin wax, beeswax, olefin wax, olefin wax containing a carboxyl group and/or a carboxylic anhydride group, silicone oil, and organopolysiloxane. An amount of such a release agent to be mixed is preferably 0.01 to 5 parts by weight with respect to 100 parts by weight of the total amount of the polyester polymer(first component) and the polycarbonate(second component).

As the higher fatty acid ester, partial ester or total ester of a monohydric or a polyhydric alcohol having 1 to 20 carbon atoms and a saturated fatty acid having 10 to 30 carbon atoms is preferred. Examples of such the partial esters or total esters of a monohydric or a polyhydric alcohol and a saturated fatty acid include monoglyceride stearate, diglyceride stearate, triglyceride stearate, monosorbitate stearate, stearyl stearate, monoglyceride behenate, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate, and 2-ethylhexyl stearate.

Among others, monoglyceride stearate, triglyceride stearate, pentaerythritol tetrastearate, and behenyl behenate are preferably used.

As the higher fatty acid in the present invention, saturated fatty acids having 10 to 30 carbon atoms are preferred. Examples of such a fatty acid include myristic acid, lauric acid, palmitic acid, stearic acid, and behenic acid.

These release agents may be used alone or in combination of two or more species. Metallic soap such as calcium stearate and zinc stearate improves a releasing property but causes much turbidity, and therefore it is unsuitable for the resin composition of the present invention.

The thermoplastic resin composition of the present invention may be mixed with a light stabilizer within the bounds of not impairing the object of the present invention.

Examples of such a light stabilizer includes 2-(2'-hydroxy-5'-tert-octhylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis(α,α-dimethylbenzyl)phenyl]-2H-benzotriazole, 2,2'-methylenebis(4-cumyl-6-benzotriazolephenyl), and 2,2'-p-phenylenebis(1,3-benzooxazine-4-one). An amount of such a light stabilizer to be mixed is preferably 0.01 to 2 parts by weight with respect to 100 parts by weight of the total amount of the polyester polymer (second component) and the polycarbonate (second component). These light stabilizers may be used alone or in combination of two or more species.

A blueing agent may be mixed in the resin composition of the present invention in order to cancel out a yellowish tone of the lenses attributed to the polyester polymer, the polycarbonate or an ultraviolet absorber, in molding a resin into a lens. Any blueing agent can be used without any particular obstacles as long as it is one used for the polyester polymer or the polycarbonate resin.

Generally, anthraquinone type dye is easily available and preferred. Examples of specific blueing agents include a general name Solvent Violet 13 (CA. No (color index No) 60725), a general name Solvent Violet 31 (CA. No 68210), a general name Solvent Violet 33 (CA. No 60725), a general name Solvent Blue 94 (CA. No 61500), a general name Solvent Violet 36 (CA. No 68210), a general name Solvent Blue 97 and a general name Solvent Blue 45 (CA. No 61110), as a representative one.

These blueing agents are usually mixed in the proportion of 0.1×10⁻⁴ to 2×10⁻⁴ parts by weight with respect to 100 parts by weight of the total amount of the polyester polymer(second component) and the polycarbonate (second component).

As a method of blending the polyester polymer (first component) with the polycarbonate (second component) of the present invention, an arbitrary method is employed. There are, for example, a method of mixing with a tumbler, a V-type blender, a super mixer, a Nauter mixer, a Banbury mixer, a kneading roller and an extruder, and a solution blending method of mixing the above two components with these components dissolved in a common good solvent such as methylene chloride, but this method is not particularly limited to these methods and any method may be employed as long as it is a polymer blending method usually used.

The resin composition thus obtained can be molded into a shaped substance by usually known methods such as an injection molding process, an extrusion molding process and a compression molding process as-is or after pelletizing the resin composition once with an melt extruder.

The resin composition of the present invention preferably gives a single glass transition point in conducting measurement by differential scanning calorimetry (DSC). Generally, resin compositions may gives two peaks corresponding to the polyester polymer (first component) and the aromatic polycarbonate (second component), and other peaks or shoulders, but most of them have low transparency, thermal unstability and poor moldability and hardly become a good optical material.

Preferably, a uniaxial extruder or a biaxial extruder may be used in melt extruding in order to enhance the miscibility of the thermoplastic resin composition of the present invention to attain a stable releasing property and various physical properties.

A method of using the uniaxial extruder or the biaxial extruder can be favorably employed because a solvent is not used, a burden on an environment is small and productivity is high. A temperature of melt kneading of the extruder is 200 to 350°C and preferably 230 to 300°C. When this temperature is lower than 200°C, since the melt viscosity of the resin is high, a load on the extruder becomes large and productivity is reduced. When it is higher than 350°C, the resin tends to be easily deteriorated and becomes yellowish, and the strength of the resin is lowered because of decreasing the molecular weight of resin. And, a thermal stabilizer, an antioxidant, a release agent and a light stabilizer may be simultaneously kneaded as required.

When an extruder is used, it is desirable to install a filter in order to prevent contaminants such as burn of resin and foreign matter in extruding. A size of filter eliminating the foreign matter depends on an optical precision required, and a filter capable of filtering out the foreign matter up to a size not more than 100 µm is preferred. When the mixing of the foreign matter is particularly avoided, a filter capable of filtering out up to a size not more than 40 µm and further not more than 10 µm is preferred.

A resin extruded from an extruder is preferably processed in a clean room in order to prevent the mixing of the foreign matter after extrusion.

And, as the extruded resin is cooled and palletized, it is preferred to use a cooling method such as air-cooling and water-cooling. When air-cooling is employed, it is desired to use air in which the foreign matter is eliminated with a HEPA (high efficiency particle air) filter in advance, and to prevent the re-attachment of the foreign matter in air. When water-cooling is employed, it is desired to use water in which a metal content is eliminated with an ion-exchange resin and further the foreign matter in water is eliminated with a filter. There are filters of various sizes, and filters of 10 to 0.45 µm are preferably used.

As for a polymerization degree of the polyester polymer, a polyester polymer (first component) having a polymerization degree corresponding to 0.3 to 0.8 of an intrinsic viscosity (measured at 20°C in a mixed solution of 60% by weight of phenol and 40% by weight of 1,1,2,2-tetrachloroethane) is preferred. A substance having the extremely low intrinsic viscosity has the low mechanical strength at the time of being molded into a lens or the like. And, when the intrinsic viscosity becomes large, fluidity during molding is reduced and a cycle characteristic is deteriorated, and therefore the birefringence of a shaped article tends to be apt to become large. Therefore, as the polyester polymer (first component), a polyester polymer having a polymerization degree corresponding to 0.3 to 0.8 of an intrinsic viscosity is employed, and furthermore preferably, a polyester polymer having a polymerization degree corresponding to 0.35 to 0.7 of an intrinsic viscosity is employed.

As for a polymerization degree of the polycarbonate, aromatic polycarbonate having a polymerization degree corresponding to 0.2 to 0.7 of an intrinsic viscosity is preferred. A substance having the extremely low intrinsic viscosity has the insufficient mechanical strength at the time of being molded into a lens. And, when the intrinsic viscosity becomes large, fluidity during molding is reduced, and molecular orientation is apt to occur and the birefringence of an injection molded polymer tends to become large. Therefore, as the aromatic polycarbonate, aromatic polycarbonate having a polymerization degree corresponding to 0.2 to 0.7 of an intrinsic viscosity is employed, and furthermore preferably, aromatic polycarbonate having a polymerization degree corresponding to 0.3 to 0.55 of an intrinsic viscosity is employed.

A glass transition point of the resin composition of the present invention is 100°C or higher, preferably is 120°C or higher, and furthermore preferably is 130°C or higher. When the glass transition point is 100°C or higher, it is preferred since the deformation under the high temperature and high humidity conditions hardly occur and variations in the figure tolerance of a lens are low.

The resin composition for optical materials of the present invention is formed by mixing uniformly two components having the respective polymerization degrees described above, but it is preferred to select a blending ratio of the polyester polymer (first component) and the aromatic polycarbonate (second component) within a range of 5 : 95 to 95 : 5 by weight. When the blending ratio is within this range, it is preferred since a remarkable effect of reducing the birefringence is attained. Further, it is preferred to select the blending ratio within a range of 20 : 80 to 80 : 20 by weight.

In the present invention, when the solution polymerization process or the interfacial polymerization process is used in producing the polyester polymer (first component), generally, acid chloride is used as an active species of an acid component, and methylene chloride or chloroform is used as a solvent, but since an chloride of a byproduct and catalytic compounds remain in a polymer and these substances have a detrimental effect on the product quality, the residual foreign matter has to be generally removed after the polymerization step. These substances cause the operability in the molding steps of sheet, film, plate and fiber to deteriorate and even the quality of a shaped body to be obtained to deteriorate. For example, thermal degradation occurs much in heating the shaped body to elevated temperatures.

And, when the resin composition of the present invention is used as an optical material of an optical disk or a magnet optical disk, a metallic thin film such as a reflective film and a recording film is deposited on a substrate by a technique such as vapor deposition, sputtering or the like, but when a residual chlorine content exists within the substrate, a step of removing the residual chlorine, such as adequate cleaning or adequate filtering, is required since the residual chlorine erodes the reflective film and the recording film and causes the life and the reliability of the optical disk or the magnet optical disk to decrease. As a polymerization method of the polyester polymer (first component), transesterification in which there is no contamination of chlorine is more preferable.

An injection compression molding machine is usually well suited for molding an optical disk substrate, and in this molding, a surface temperature of a die and a temperature of a resin are particularly important as a molding condition. The molding conditions cannot be defined since they vary with a blending ratio, composition and a polymerization degree of the polyester polymer (first component) and the polycarbonate (second component), but the surface temperature of a die is preferably at least 50°C and at most 160°C, and it is desired to adjust the resin temperature at this surface temperature of a die so as to be at least 220°C and at most 330°C. When the surface temperature of a die is 50°C or lower, both the fluidity and the transfer of the resin are poor, and therefore stress-strain remains in injection molding and the birefringence tends to increase, and further it is not economical since a molding cycle is extended. When the surface temperature of a die is 160°C or higher, though the transfer of the resin is good, the resin tends to deform at the time of releasing. And, when the resin temperature is 330°C or higher, the degradation of the resin is apt to occur, resulting in a reduction in strength of a shaped article and coloring of a shaped article.

When the optical material is molded from the resin composition for optical materials of the present invention, it is desired to do it, being careful not to immix dust or the like in the steps of from charging a raw material through a polymerization reaction to extruding a copolymer into a cooling medium as shaped article in pellet or sheet form. Cleanliness for this molding is generally 1000 or less for molding of compact disks and 100 or less for molding of information recording media

Injection molding or injection compression molding is generally used for molding a lens. In this molding, a surface temperature of a die and a temperature of a resin are particularly important as a molding condition. The molding conditions cannot be defined since they vary with a blending ratio, composition and a polymerization degree of the polyester polymer (first component) and the polycarbonate (second component), but the surface temperature of a die is preferably at least 50°C and at most 160°C, and it is desired to adjust the resin temperature at this surface temperature of a die so as to be at least 220°C and at most 330°C. When the surface temperature of a die is 50°C or lower, both the fluidity and the transfer of the resin are poor, and therefore stress-strain remains in injection molding and the birefringence tends to increase, and lens performance required may not be satisfied. When the temperature of a die is 160°C or higher, the resin tends to deform at the time of releasing. And, when the resin temperature is 220 or lower, it is not preferred since the fluidity of the resin is poor and excessive load may be exerted on a molding machine. When the resin temperature is 330°C or higher, the degradation of the resin is apt to occur, resulting in a reduction in strength of a shaped article and coloring of a shaped article.

When a lens is molded, it is necessary to finish the surface shape of a lens precisely and reduce birefringence-causing internal residual stress as far as possible in order to secure lens performance. Though a balance with a molding cycle have to be considered, it is often to mold a resin with a die temperature raised as far as possible and a cooling time lengthened. When the die temperature approaches a glass transition point Tg, a mold shrinkage may become small and therefore a releasing property from a die may be deteriorated. In such a case, it is more preferred to use a resin composition in which the above-mentioned release agent is mixed.

Hereinafter, the present invention will be described by way of examples.

### EXAMPLES

### (1) Refractive index and Abbe number

An Abbe refractometer DR-M2 manufactured by ATAGO CO., LTD. was used, and a refractive index n_{d} in a D-line was measured using an interference filter of a wavelength of 589 nm, a refractive index n_{c} in a C-line using an interference filter of a wavelength of 639 nm, and a refractive index n_{F} in a F-line using an interference filter of a wavelength of 486 nm. An Abbe number ν_{d} was calculated from the formula: (1 - n_{d})/(n_{c} - n_{F}). A test sample for measurement was prepared by forming a resin by pressing at a temperature of 160 to 240°C to prepare a film having a thickness of 80 to 150 µm and cutting the obtained film into a rectangular piece of a size of about 8x20 mm. A refractive index and an Abbe number of the test sample were measured at 20°C using 1-bromonaphthalene as an interfacial solution.

### (2) Glass transition point (Tg)

Using a differential scanning calorimeter (DSC-110 manufactured by Seiko Instruments Inc.), about 10 mg of sample was heated at a temperature raising rate of 10°C/min and measured. A glass transition point Tg was determined according to JIS K 7121 (1987).

### (3) Molecular weight

G-6000, G-4000 and G-3000 produced by TOSOH CORPORATION as a column were connected in series. Using a reference standard of polystyrene, a calibration curve was prepared at a flow rate of 1 ml/min at 40°C using chloroform as an eluant and a UV detector as a detector. From this calibration curve, a weight-average molecular weight on the polystyrene equivalent basis was determined.

### (4) Light transmittance

The light transmittance of a shaped article of a flat plate having a size of 30 mm × 30 mm × 3 mm, which was molded with an injection molding machine (manufactured by Sumitomo Heavy Industries, Ltd., MINIMAT 14/7B) with a die temperature set at Tg-20°C, was measured using a spectrophotometer (UV-3101PC manufactured by SHIMADZU CORPORATION) .

### (5) Melt flow rate (MFR)

A melt flow rate was measured under the conditions of orifice diameter 2 mm, temperature 230°C and load 2160 g according to JIS K 7210.

### (6) Birefringence

By using a polarizing microscope manufactured by Carl Zeiss AG, the birefringence was measure with monochromatic light with Serarmont, Berek, and Brace-Keller compensators fitted to the polarizing microscope.

### (6-1) Evaluation on film

A resin was melted at a temperature of 260 to 300°C, and a test sample in the form of a disk of 30 mm in diameter and 1 mm in thickness was prepared by extruding, and further the test sample extruded was formed by pressing at a temperature of 160 to 240°C to prepare a film having a thickness of 80 to 150 m. The obtained film was cut into a rectangular piece of a size of 4x40 mm to obtain a test sample for measurement. The test sample for measurement was drawn by 40% at a rate of 20 %/sec at a temperature of a glass transition point (Tg)+10°C and then rapidly cooled to obtain a drawn film. A birefringence was measured on each of these films.

### (6-2) Evaluation on shaped article

After obtaining a shaped article of a flat plate having a size of 30 mm × 30 mm × 3 mm, which was molded using an injection molding machine (manufactured by Sumitomo Heavy Industries, Ltd., MINIMAT 14/7B) at a die temperature of Tg-20°C, the shaped article was annealed at a temperature of Tg-20°C for 3 hours, and the retardation of its center portion was measured.

### (7) Intrinsic viscosity

a copolymer 0.15 to 0.5 g was dissolved in 50 ml of a mixed solution of phenol of 60% by weight and 1,1,2,2-tetrachloroethane of 40% by weight at 80°C and then the viscosity of the solution was measured at 20°C to determine the intrinsic viscosity.

### (8) Impact resistant property

Izot impact strength was measured according to JIS K 7110

### (9) Determination of diethylene glycol (hereinafter, abbreviated as DEG)

### Preparation of sample

Into a 200 ml flask with ground stopper, 50 ml of 1-propanol was placed and 2.81 g of potassium hydroxide and 2 g of resin pellets precisely weighed were placed. Then, a bulb Allihn condenser cooled with water was attached, and the content of the flask was heated and refluxed for 2 hours while stirring. After cooling, 10 ml of water and 7 g of terephthalic acid were added, and the mixture was heated and refluxed for 1 hour. 5 ml of a 1% 1-propanol solution of tetraethylene glycol dimethyl ether was added as an internal reference and the mixture was stirred for about 5 minutes. A sample was filtered and quantified by a gas chromatograph to determine the content of diethylene glycol.

### (10) Pressure Cooker Test

A shaped article was tested under the conditions of temperature 105°C, humidity 100% and 24 hours using Highly Accelerated Stress Test System (manufactured by Tabai Espec Corporation, TPC-212M).

An appearance of the shaped article after the test was observed and the light transmittance was measured with a spectrophotometer (UV-3101PC manufactured by SHIMADZU CORPORATION).

### [Example 1]

Using 1,4-cyclohexanedicarboxylic acid, and 9,9-bis[4-(2-hydroxyethoxy)phenyl]fluorene in an amount of 0.8 mol and ethylene glycol in an amount of 2.2 mol per 1 mol of 1,4-cyclohexanedicarboxylic acid as a raw material, these compounds were charged into a reaction vessel, and vessel contents was gradually heated from room temperature to 230°C according to a normal method while stirring to perform an esterification reaction. After drawing a predetermined amount of water out of a system, germanium oxide, a polymerization catalyst, in an amount of 0.002 mol and phosphoric acid trimethyl ester in an amount of 0.0014 mol for preventing coloring were charged into the vessel. Temperature raising and pressure reducing were gradually conducted while drawing ethylene glycol generated until a temperature of a heating vessel reached 270°C and a degree of vacuum reached 133 Pa (1 Torr) or lower. These conditions were held during viscosity and agitating torque increased, and after reaching a specified agitating torque (after a lapse of about four hours), the reaction was completed and a reaction product was extruded into water to obtain a pellet.

This resin was pressed at 200°C to obtain a film of about 100 µm in thickness. The refractive index of the film was 1.607, a glass transition point was 126°C and the content of DEG was 1.8 mol%.

This polyester resin (first component) and polycarbonate (second component: produced by Teijin Chemicals Ltd., Panlite L1250) were charged into a biaxial extruder (TEM35B manufactured by TOSHIBA MACHINE CO., LTD.) installed in a clean room in the weight proportions of 50:50, and bis(2,4-di-tert-butylphenyl)pentaerythritoldiphosphite as a thermal stabilizer was added in an amount of 0.1 parts by weight with respect to 100 parts by weight of the total of the polyester resin and the polycarbonate, and the resulting mixture was kneaded and then a resin extruded was cooled in a water tank filled with water pass through a filter of 1 µm and cut sequentially with a cutter to obtain a pellet. In this operation, a temperature of resin at the outlet of a discharge mouthpiece was 280°C.

The resulting resin pellet was pressed at 200°C to obtain a film of about 100 µm in thickness. The refractive index of the film was 1.595, an Abbe number was 29, and a glass transition point was 132°C.

A shaped article, into which the obtained resin pellet was molded with an injection molding machine, was uniform and clear. The results are shown in Table 1.

### [Examples 2 to 5]

Each pellet was prepared by following the same procedure as in Example 1 except that the composition of a polyester polymer (first component) and polycarbonate (second component) was changed as shown in Table 1, and evaluated similarly. The results of evaluations are shown in Table 1. In any example, a uniform and clear shaped article was obtained and the moldability was good.

### [Example 6]

Using 2,6-decalindicarboxylic acid dimethyl ester, and 9,9-bis[4-(2-hydroxyethoxy)phenyl]fluorene in an amount of 0.55 mol and ethylene glycol in an amount of 2.2 mol per 1 mol of 2,6-decalindicarboxylic acid dimethyl ester as a raw material, and calcium acetate in an amount of 0.0008 mol and manganese acetate in an amount of 0.0002 mol per 1 mol of 2,6-decalindicarboxylic acid dimethyl ester as a catalyst, these compounds were charged into a reaction vessel, and the contents of the vessel was gradually heated from room temperature to 230°C according to a normal method while stirring to perform an transesterification reaction. After drawing a predetermined amount of methanol out of a system, germanium oxide, a polymerization catalyst, in an amount of 0.012 mol and phosphoric acid trimethyl ester in an amount of 0.0018 mol for preventing coloring were charged into the vessel. Temperature raising and pressure reducing were gradually conducted while drawing ethylene glycol generated until a temperature of a heating vessel reached 270°C and a degree of vacuum reached 133 Pa (1 Torr) or lower. These conditions were held during viscosity and agitating torque increased, and after reaching a specified agitating torque (after a lapse of about two hours), the reaction was completed and a reaction product was extruded into water to obtain a pellet.

The glass transition point of the pellet was 123°C, a refractive index was 1.584 and the content of DEG was 2.3 mol%.

This polyester resin (first component) and polycarbonate (second component: produced by Teijin Chemicals Ltd., Panlite L1250) were charged into a biaxial extruder (TEM35B manufactured by TOSHIBA MACHINE CO., LTD.) installed in a clean room in the weight proportions of 50:50, and bis(2,4-di-tert-butylphenyl)pentaerythritoldiphosphite as a thermal stabilizer was added in an amount of 0.1 parts by weight with respect to 100 parts by weight of the total of the polyester resin and the polycarbonate, and the resulting mixture was kneaded and then a resin extruded was cooled in a water tank filled with water pass through a filter of 1 µm and cut sequentially with a cutter to obtain a pellet. In this operation, a temperature of resin at the outlet of a discharge mouthpiece was 280°C.

The resulting resin pellet was pressed at 200°C to obtain a film of about 100 µm in thickness. The refractive index of the film was 1.584, an Abbe number was 31, and a glass transition point was 130°C.

A shaped article, into which the obtained resin pellet was molded with an injection molding machine, was uniform and clear. The results are shown in Table 1.

### [Example 7]

The polyester resin (first component) obtained in Example 1 and polycarbonate (second component: produced by Teijin Chemicals Ltd., Panlite L1250) were mixed in the weight proportions of 50:50, and then bis(2,4-di-tert-butylphenyl)pentaerythritoldiphosphite as a thermal stabilizer was added to this mixed resin in an amount of 0.05 parts by weight with respect to 100 parts by weight of the total of the polyester resin and the polycarbonate, and stearic acid as a release agent was added in an amount of 0.4 parts by weight similarly, and a mixture was mixed. The mixed resin and additives were charged in a quantitative manner into a biaxial extruder (TEM25B manufactured by TOSHIBA MACHINE CO., LTD.), located in a clean room and equipped with a filter of 30 µm, to be kneaded, and then a resin extruded was cooled in a water tank filled with water pass through a filter of 1 µm and cut sequentially with a cutter to obtain a pellet. In this operation, a temperature of resin at the outlet of a discharge mouthpiece was 280°C.

The resulting resin pellet was pressed at 200°C to obtain a film of about 100 µm in thickness. The refractive index of the film was 1.595, an Abbe number was 29, and a glass transition point was 131°C.

The results are shown in Table 1. A shaped article exhibits uniform and clear. Even though a die temperature was set at a temperature close to Tg (of the order of Tg-10°C), the moldability was good and a releasing property was also good.

**Table 1**

| | Composition of first component | | Composition in kneading | | Glass transition point (°C) | MRF g/10min | Impact strength | Refractive index nd | Abbe number | Light Transmittance 3mm% | | | Bireftingence ×10⁻⁴ | Retardation nm |
|---|---|---|---|---|---|---|---|---|---|---|---|---|---|---|
| | acid | dihydroxy compound | parts by weight of first component | parts by parts by weight of second component | | | | | | 700n | 500nm | 400nm | | |
| Example1 | A | 80 | 50 | 50 | 132 | 4 | 3.4 | 1.595 | 29 | 89.2 | 87.2 | 82.3 | 46 | 70 |
| Example2 | A | 80 | 30 | 70 | 136 | 3 | 3.8 | 1.591 | 29 | 89.5 | 88.0 | 84.2 | 70 | 30 |
| Example3 | A | 80 | 70 | 30 | 128 | 5 | 3.2 | 1.600 | 28 | 88.3 | 86.3 | 80.1 | 32 | 120 |
| Example4 | A | 80 | 10 | 90 | 126 | 2 | 4.5 | 1.587 | 29 | 89.6 | 88.9 | 86.1 | 89 | 25 |
| Example5 | A | 80 | 90 | 10 | 137 | 7 | 3 | 1.604 | 28 | 88.0 | 85.4 | 78.1 | 20 | 180 |
| Example6 | B | 55 | 50 | 50 | 130 | 4 | 3 | 1.584 | 31 | 89.3 | 87.4 | 82.5 | 51 | 75 |
| Example7 | A | 80 | 50 | 50 | 131 | 5 | 3.4 | 1.595 | 29 | 89.2 | 97.1 | 82 | 46 | 70 |
| Comparative example 1 | - | - | 0 | 100 | 140 | 1 | 7 | 1.585 | 30 | 89.9 | 89.5 | 88.0 | 95 | 200 |
| Comparative example 2 | A | 80 | 100 | 0 | 140 | 12 | 2.9 | 1.607 | 27 | 88.6 | 85.3 | 76.5 | 3 | 15 |
| Comparative example 3 | A | 80 | 50 | 50 | 131 | 5 | 3.4 | - | - | 41.6 | 18.2 | 4.3 | - | - |

| | | | | | | | | | | | | | | |
|---|---|---|---|---|---|---|---|---|---|---|---|---|---|---|
| Dihydroxyl compound: 9,9-bis[4-(2-hydroxyethoxy)phenyl]fluorene A: 1,4-cyclobexanedicarboxylic acid B: 2.6-decalindicarboxylic acid dimethyl ester | | | | | | | | | | | | | | |

### Comparative Example 3

A pellet was obtained by following the same procedure as in Example 7 except for changing the release agent from stearic acid to 0.4 parts by weight of calcium stearate. The shaped article exhibited white turbidity and was unsuitable for a lens material using for a visible light region.

The results of Comparative Example 1 show measurement values in the case of using polycarbonate (second component: produced by Teijin Chemicals Ltd., Panlite L1250) singly. The results of Comparative Example 2 show measurement values in the case of using the polyester polymer (first component) described in Example 1 singly.

As is apparent from Table 1, the resin composition of the present invention is found to be a well-balanced resin composition maintaining transparency, heat resistance and impact resistance, in which the polycarbonate and the polyester polymer exert and complement their advantages and disadvantages that polycarbonate has good impact resistance and transparency, but its birefringence is large and a polyester polymer has good fluidity, a high refractive index and low birefringence, but impact resistance, heat resistance and transparency are unsatisfactory.

The results of a pressure cooker test are shown in Table 2. As environmental testing of a lens, the tests under the conditions of temperature 65°C, relative humidity 80% and several hundreds hours or the conditions of temperature 85°C, relative humidity 90% and several hundreds hours are commonly employed, but an accelerated test of the stability under the high temperature and high humidity conditions of temperature 105°C, relative humidity 100% and 24 hours, which were more severe conditions, was carried out. In Examples 1 to 5 and Example 7 of the present invention, a part of resins exhibited a slight white turbidity and decreased in the light transmittance. In the results of Comparative Example 2, namely, the test results of the case of using the polyester polymer (first component) used in Examples 1 to 5 and Example 7 singly, a white turbidity was large and light rays hardly transmitted. From this result, it is understood that the resin composition of the present invention, which is obtained by blending a polyester polymer with polycarbonate, has improved durability under the high temperature and high humidity conditions.

**Table 2**

| | Before Pressure Cooker Test | | | | After Pressure Cooker Test | | | | |
|---|---|---|---|---|---|---|---|---|---|
| | Appearance | Light. Transmittance(%) 3mm | | | Light Transmittance(%) 3mm | | | Appearance | |
| | | 700nm | 500nm | 400nm | 700nm | 500nm | 400nm | deformation | white turbidity |
| Example1 | □> | 892 | 872 | 82.3 | 81.3 | 76.5 | 67.3 | □> | □ ¢ □> |
| Example2 | □> | 89.5 | 88,0 | 842 | 87.5 | 86.0 | 802 | □> | □> |
| Example3 | □> | 88.3 | 86.3 | 80.1 | 78.6 | 70.5 | 59.3 | □> | □ ¢ |
| Example4 | □> | 89.6 | 88.9 | 86.1 | 88.5 | 87.5 | 86.0 | □> | □> |
| Example5 | □> | 88.0 | 85.4 | 78.1 | 50.5 | 40.3 | 302 | □> | □ ¢ |
| Example6 | □> | 89.3 | 87.4 | 82.5 | - | - | - | □> | |
| Example7 | □> | 89.2 | 97.1 | 82.0 | 82.3 | 77.5 | 68.3 | □> | □ ¢ □> |
| Comparative example 1 | □> | 89.9 | 89.5 | 88.0 | 89.0 | 88.0 | 87.0 | □> | □> |
| Comparative example 2 | □> | 88.6 | 85.3 | 76.5 | 30.6 | 19.4 | 102 | □> | □∼ |

| | | | | | | | | | |
|---|---|---|---|---|---|---|---|---|---|
| Test conditions: temperature 105°C, humidity 100%and 24 hours deformation: □> no deformation white turbidity: □> no white turbidity; □ ¢slight white turbidity: □ white turbidity | | | | | | | | | |

### INDUSTRIAL APPLICABILITY

The resin composition of the present invention is suitable for lens applications such as a camera lens, a viewfinder lens and lenses for CCD and CMOS, and for use in films, sheets, and optical materials utilized for a liquid crystal display and a plasma display.

## Claims

1. A resin composition obtained by blending a polyester polymer obtainable from a dicarboxylic acid compound and a dihydroxyl compound with a polycarbonate, wherein said dicarboxylic acid compound comprises 1,4-cyclohexanedicarboxylic acid and/or an ester-forming derivative thereof and said dihydroxyl compound comprises a compound expressed by the formula (1): 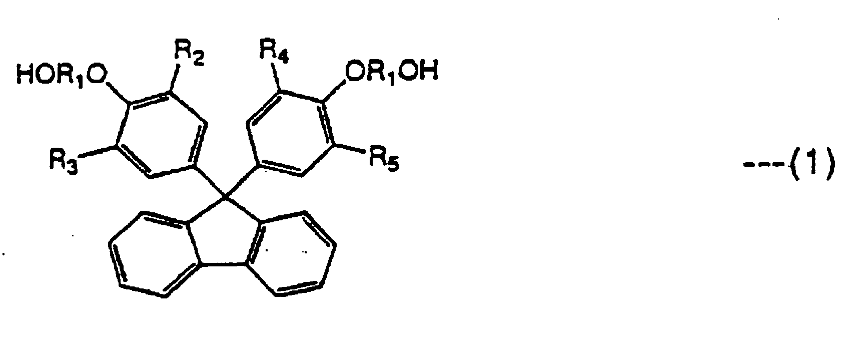 wherein R₁ is an alkylene group having 2 to 4 carbon atoms, and R₂, R₃, R₄, and R₅ represent hydrogen, or an alkyl group having 1 to 4 carbon atoms, an aryl group or an aralkyl group, respectively, and may be identical to or different from one another.

2. The resin composition according to Claim 1, being obtained by blending a polyester polymer obtainable from a dicarboxylic acid compound and a dihydroxyl compound with a polycarbonate,
wherein said dicarboxylic acid compound comprises 1,4-cyclohexanedicarboxylic acid and/or an ester-forming derivative thereof and the dihydroxyl compound contains a compound expressed by said formula (1), and
a blending ratio of the polyester polymer and the polycarbonate is in a range from 5 : 95 to 95 : 5 by weight.

3. The resin composition according to Claim 1 or 2, wherein the 1,4-cyclohexanedicarboxylic acid and/or an ester-forming derivative thereof is at least one species of compounds selected from 1,4-cyclohexanedicarboxylic acid and 1,4-cyclohexanedicarboxylic acid dimethyl ester.

4. The resin composition according to any one of Claims 1 to 3, wherein the polyester polymer is a polyester polymer obtainable by using at least one member selected from the group consisting of 1,4-cyclohexanedicarboxylic acid and 1,4-cyclohexanedicarboxylic acid dimethyl ester having a ratio between trans and cis isomers at the stage of monomer, measured by ¹H-NMR, of 90/10 to 10/90, and the ratio between trans and cis isomers of the polyester polymer is within a range of 50/50 to 70/30.

5. The resin composition according to any one of Claims 1 to 4, wherein the dihydroxyl compound expressed by the formula (1) is 9 , 9-bis[4-(2-hydroxyethoxy)phenyl]fluorene and/or 9,9-bis[4-(2-hydroxyethoxy)-3-methylphenyl] fluorene.

6. The resin composition according to any one of Claims 1 to 5, wherein the polycarbonate is aromatic polycarbonate.

7. A resin composition, which is obtained by melt-kneading the resin composition according to any one of Claims 1 to 6 under the condition of heating.

8. A resin composition, which is obtained by melt-kneading the resin composition according to any one of Claims 1 to 7 under the condition of heating with adding a thermal stabilizer simultaneously.

9. A resin composition, which is obtained by melt-kneading the resin composition according to any one of Claims 1 to 8 under the condition of heating with adding a thermal stabilizer and a release agent simultaneously, wherein the release agent comprises at least one member selected from the group consisting of a higher fatty acid ester of a monohydric or a polyhydric alcohol, a higher fatty acid, paraffin wax, beeswax, olefin wax, olefin wax containing a carboxyl group and/or a carboxylic anhydride group, silicone oil, and organopolysiloxane.

10. An optical material obtained by molding the resin composition according to any one of Claims 1 to 9.

## Patentansprüche

1. Harzzusammensetzung, erhalten durch Vermischen eines Polyesterpolymers, das aus einer Dicarbonsäureverbindung und einer Dihydroxyverbindung erhältlich ist, mit einem Polycarbonat, wobei die Dicarbonsäureverbindung 1,4-Cyclohexandicarbonsäure und/oder ein esterformendes Derivat davon umfasst
und die Dihydroxyverbindung eine Verbindung, ausgedrückt durch Formel (1), umfasst 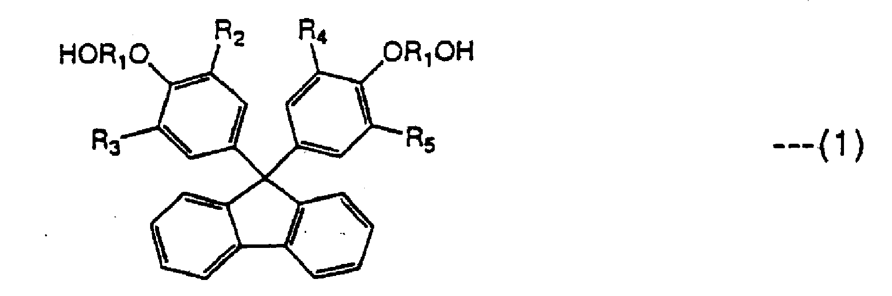 worin R₁ eine Alkylengruppe mit 2 bis 4 Kohlenstoffatomen ist, und R₂, R₃, R₄ und R₅ jeweils Wasserstoff, oder eine Alkylgruppe mit 1 bis 4 Kohlenstoffatomen, eine Arylgruppe oder eine Aralkylgruppe darstellen, und identisch oder voneinander verschieden sein können.

2. Harzzusammensetzung gemäß Anspruch 1, erhalten durch Vermischen eines Polyesterpolymers, das aus einer Dicarbonsäureverbindung und einer Dihydroxyverbindung erhältlich ist, mit einem Polycarbonat, **dadurch gekennzeichnet, dass** die Dicarbonsäureverbindung 1,4-Cyclohexandicarbonsäure und/oder ein esterformendes Derivat davon umfasst,
und die Dihydroxyverbindung eine Verbindung, ausgedrückt durch Formel (1), umfasst, und das Mischungsverhältnis des Polyesterpolymers und des Polycarbonats, bezogen auf das Gewicht, im Bereich von 5 : 95 bis 95 : 5 ist.

3. Harzzusammensetzung gemäß Anspruch 1 oder 2, wobei die 1,4-Cyclohexandicarbonsäure und/oder ein esterformendes Derivat davon zumindest eine Verbindung, ausgewählt aus 1,4-Cyclohexandicarbonsäure und 1,4-Cyclohexandicarbonsäuredimethylester ist.

4. Harzzusammensetzung gemäß einem der Ansprüche 1 bis 3, wobei das Polyesterpolymer ein Polyesterpolymer ist, erhältlich durch Verwendung von mindestens einem Element, ausgewählt aus der Gruppe, bestehend aus 1,4-Cyclohexandicarbonsäure und 1,4-Cyclohexandicarbonsäuredimethylester mit einem Verhältnis zwischen trans- und cis-Isomeren in der Monomerphase, gemessen durch ¹H-NMR, von 90/10 bis 10/90, und das Verhältnis zwischen trans- und cis-Isomeren des Polyesterpolymers im Bereich von 50/50 bis 70/30 liegt.

5. Harzzusammensetzung gemäß einem der Ansprüche 1 bis 4, wobei die Dihydroxyverbindung, ausgedrückt durch Formel (1), 9,9-bis[4-(2-Hydroxyethoxy)phenyl]fluoren und/oder 9,9-bis[4-(2-Hydroxyethoxy)-3-methylphenyl]fluoren ist.

6. Harzzusammensetzung gemäß einem der Ansprüche 1 bis 5, wobei das Polycarbonat ein aromatisches Polycarbonat ist.

7. Harzzusammensetzung, die durch Schmelzkneten der Harzzusammensetzung gemäß einem der Ansprüche 1 bis 6 unter Erhitzen erhalten wird.

8. Harzzusammensetzung, die durch Schmelzkneten der Harzzusammensetzung gemäß einem der Ansprüche 1 bis 7 unter Erhitzen bei gleichzeitiger Zugabe eines thermischen Stabilisators erhalten wird.

9. Harzzusammensetzung, die durch Schmelzkneten der Harzzusammensetzung gemäß einem der Ansprüche 1 bis 8 unter Erhitzen bei gleichzeitiger Zugabe eines thermischen Stabilisators und eines Trennmittels erhalten wird, wobei das Trennmittel mindestens ein Element, ausgewählt aus der Gruppe, bestehend aus einem höheren Fettsäureester eines einwertigen oder mehrwertigen Alkohols, einer höheren Fettsäure, Paraffinwachs, Bienenwachs, Olefinwachs, Olefinwachs enthaltend eine Carbonylgruppe und/oder eine Carbonsäureanhydridgruppe, Siliconöl und Organopolysiloxan umfasst.

10. Optisches Material, erhalten durch Formen der Harzzusammensetzung gemäß einem der Ansprüche 1 bis 9.

## Revendications

1. Composition de résine obtenue en mélangeant un polymère de polyester préparé à partir d'un composé acide dicarboxylique et d'un composé dihydroxy avec un polycarbonate, dans laquelle ledit composé acide dicarboxylique comprend de l'acide 1,4 cyclohexanecarboxylique et/ou un dérivé de ce dernier formant l'ester et ledit composé dihydroxy comprend un composé exprimé par la formule (1) : 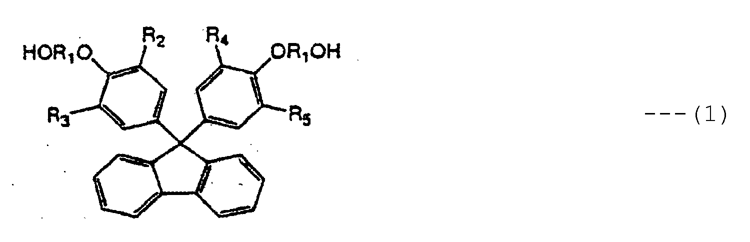 dans laquelle R₁ est un groupe alkylène ayant 2 à 4 atomes de carbone, et R₂, R₃, R₄, et R₅ représentent l'hydrogène, ou un groupe alkyle, ayant 1 à 4 atomes de carbone, un groupe aryle ou un groupe aralkyle.

2. Composition de résine selon la revendication 1, obtenue en mélangeant un polymère de polyester préparé à partir d'un composé acide dicarboxylique et d'un composé dihydroxy avec un polycarbonate, dans laquelle ledit composé acide dicarboxylique comprend de l'acide 1,4 cyclohexanecarboxylique et/ou un dérivé de ce dernier formant l'ester et le composé dihydroxy contient un composé exprimé par ladite formule (1), et un rapport de mélange du polymère de polyester et du polycarbonate est situé dans la plage de 5 : 95 à 95 : 5 en poids.

3. Composition de résine selon la revendication 1 ou 2, dans laquelle l'acide 1,4 cyclohexanecarboxylique et/ou un dérivé de ce dernier formant l'ester est au moins une espèce de composé choisie parmi l'acide 1,4 cyclohexanecarboxylique et l'ester de l'acide diméthyl 1,4 cyclohexanedicarboxylique.

4. Composition de résine selon l'une quelconque des revendications 1 à 3, dans laquelle le polymère de polyester est un polymère de polyester obtenu à l'aide d'au moins un membre choisi parmi le groupe constitué de l'acide 1,4 cyclohexanecarboxylique et de l'ester de l'acide diméthyl 1,4 cyclohexanedicarboxylique ayant un rapport entre les isomères trans et cis au stade de monomère, mesuré par ¹H-NMR, de 90/10 à 10/90, et le rapport entre les isomères trans et cis du polymère de polyester est situé dans une plage entre 50/50 et 70/30.

5. Composition de résine selon l'une quelconque des revendications 1 à 4, dans laquelle le composé dihydroxy exprimé par la formule (1) est 9,9-bis[4-(2-hydroxyéthoxy)phényl]fluorène et/ou 9,9-bis[4-(2-hydroxyéthoxy)-3-méthylphényl] fluorène.

6. Composition de résine selon l'une quelconque des revendications 1 à 5, dans laquelle le polycarbonate est un polycarbonate aromatique.

7. Composition de résine, qui est obtenue par malaxage à l'état fondu de la composition de résine selon l'une quelconque des revendications 1 à 6 en cas de chauffage.

8. Composition de résine, qui est obtenue par malaxage à l'état fondu de la composition de résine selon l'une quelconque des revendications 1 à 7 en cas de chauffage avec l'ajout simultané d'un stabilisateur thermique.

9. Composition de résine, qui est obtenue par malaxage à l'état fondu de la composition de résine selon l'une quelconque des revendications 1 à 8 en cas de chauffage avec l'ajout simultané d'un stabilisateur thermique et d'un agent de séparation, dans laquelle l'agent de séparation comprend au moins un membre choisi parmi le groupe constitué d'un ester d'acide plus gras d'un alcool monohydrique ou polyhydrique, d'un acide plus gras, de cire de paraffine, de cire d'abeilles, de cire d'oléfines, de cire d'oléfines contenant un groupe carboxyle et/ou un groupe carboxylique anhydride, d'huile de silicone, et d'organopolysiloxane.

10. Matière optique obtenue en moulant la composition de résine selon l'une quelconque des revendications 1 à 9.
